(19) Europäisches Patentamt
European Patent Office
Office européen des brevets

(11) **EP 4 776 168 A1**

(12) **DEMANDE DE BREVET EUROPEEN**

(43) Date de publication:
**15.07.2026 Bulletin 2026/29**

(21) Numéro de dépôt: **25223667.4**

(22) Date de dépôt: **16.12.2025**

(51) Classification Internationale des Brevets (IPC):
**G06F 21/55** *(2013.01)* **H04L 9/40** *(2022.01)*

(52) Classification Coopérative des Brevets (CPC):
**G06F 21/554; H04L 63/1425**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **14.01.2025 FR 2500354**

(71) Demandeur: **SeedFence**
**78290 Croissy-sur-Seine (FR)**

(72) Inventeur: **ANSEL, Pierre**
**78290 CROISSY S/SEINE (FR)**

(74) Mandataire: **Plasseraud IP**
**104 Rue de Richelieu**
**CS92104**
**75080 Paris Cedex 02 (FR)**

(54) **PROCÉDÉ DE CONSTRUCTION D'UN MODÈLE DE DÉTECTION D ANOMALIES, PROCÉDÉ DE DÉTECTION D ANOMALIES, DISPOSITIF ET PROGRAMME CORRESPONDANT**

(57) L'invention se rapporte à la construction d'un modèle de détection d'anomalies et à l'utilisation d'un tel modèle. Le procédé de création consiste en la construction d'une structure de données arborescente, par :
- obtention (S01) d'un ensemble d'évènements {Ei}, $1<i<n$, les évènements comprenant au moins une propriété et au moins une valeur correspondante, un évènement étant une instance de données collectées auprès d'un système ;
- détermination (S02) d'au moins un ordonnancement {OrdEi} de ladite au moins une propriété, qui est représentatif d'une variabilité de ladite au moins une valeur correspondant à ladite au moins une propriété ;
- construction (S03) à l'aide dudit ensemble d'évènements {Ei}, de la structure de données arborescente Tx, dans laquelle des nœuds sont formés à partir d'au moins certaines des valeurs des propriétés des évènements de l'ensemble d'évènements, selon ledit au moins un ordonnancement {OrdEi} de ladite au moins une propriété.

[Fig. 1]

Fig. 1

## Description

Domaine de la divulgation

L'invention se rapporte à la détection d'anomalies dans des systèmes de traitement de données. L'invention se rapporte plus particulièrement à la construction d'un modèle de détection d'anomalies et à l'utilisation d'un tel modèle.

## Art antérieur

Depuis quelques années, les problématiques d'identification des attaques à l'encontre d'infrastructures informatisées, tant civiles que militaires, sont au cœur des préoccupations des entreprises et des pouvoirs publics. Plusieurs techniques de détection d'anomalies dans les systèmes informatiques ont été développées, notamment dans le domaine des systèmes embarqués et des réseaux de communication. Ces techniques incluent par exemple l'utilisation de systèmes de détection d'intrusion (IDS) basés sur des signatures, des systèmes de détection d'anomalies basés sur des statistiques, et des approches utilisant des algorithmes d'apprentissage automatique.

Les systèmes de détection d'intrusion basés sur des signatures comparent les événements observés à une base de données de signatures connues d'attaques ou de comportements anormaux. Bien que cette méthode soit efficace pour détecter des attaques connues, elle est limitée par sa capacité à identifier de nouvelles menaces ou des comportements anormaux non répertoriés dans la base de données.

Les systèmes de détection d'anomalies basés sur des statistiques surveillent les paramètres du système, les comportements des processus et les flux réseau pour identifier des écarts par rapport à des modèles statistiques préétablis. Ces systèmes peuvent détecter des anomalies sans connaissance préalable des signatures d'attaques, mais ils peuvent générer un nombre élevé de faux positifs, car ils ne prennent pas toujours en compte la variabilité normale des comportements du système, particulièrement d'un système complexe.

Les approches utilisant des algorithmes d'apprentissage automatique, telles que les réseaux de neurones ou encore les machines à vecteurs de support (SVM), ont également été explorées pour la détection d'anomalies. Ces techniques apprennent à partir de données historiques pour identifier des modèles de comportement normal et détecter des écarts. Cependant, ces modèles sont souvent mis en défaut lorsqu'il s'agit de traiter des anomalies apparaissant sous forme de données catégorielles inconnues au moment de leur apprentissage. Ils peuvent par ailleurs être complexes et difficiles à interpréter, ce qui limite leur transparence et leur caractère auditable, notamment lorsque l'on souhaite apporter une certaine assurance quant à la manière dont les décisions de classification des évènements sont prises.

En résumé, bien que l'art antérieur propose diverses méthodes pour la détection d'anomalies, ces techniques présentent des limitations en termes de détection de nouvelles menaces, de gestion des faux positifs mais surtout de transparence des modèles. Il existe donc un besoin de fournir une technique permettant de résoudre au moins certains de ces inconvénients.

Résumé

La présente divulgation vient améliorer la situation. La présente divulgation vise à surmonter ces limitations en proposant une technique de détection d'anomalies basée sur des modèles d'apprentissage et de classification entièrement auditables et explicables, offrant une compréhension précise des événements normaux et anormaux.

Plus particulièrement, il est proposé un procédé de construction d'un modèle de détection d'anomalies, le procédé étant mis en œuvre par l'intermédiaire d'un dispositif informatisé de détection comprenant au moins une unité de calcul et une mémoire, le procédé comprenant au moins une itération des étapes suivantes :

- obtention d'un ensemble d'évènements {Ei}, 1<i<n, chaque évènement de l'ensemble d'évènements comprenant au moins une propriété et au moins une valeur correspondante, un évènement étant une instance de données collectées auprès d'un système ;
- détermination pour ledit ensemble d'évènements {Ei}, d'au moins un ordonnancement {OrdEi} de ladite au moins une propriété, ledit ordonnancement {OrdEi} étant représentatif d'une variabilité de ladite au moins une valeur correspondant à ladite au moins une propriété, de sorte que la propriété dont les valeurs varient le moins a un ordre inférieur à la propriété dont les valeurs varient le plus ;
- construction du modèle de détection sous la forme d'une structure de données arborescente Tx, dans laquelle des nœuds sont formés à partir d'au moins certaines des valeurs des propriétés des évènements de l'ensemble d'évènements, , à l'aide dudit ensemble d'évènements {Ei} et selon ledit au moins un ordonnancement {OrdEi} de ladite au moins une propriété.

Il est précisé, à toute fin utile, que dans une structure arborescente, selon la présente, le sommet de la structure arborescente est dénommé « racine ». Un nœud qui ne possède pas d'enfant est appelé feuille. Les nœuds autres que la racine et les feuilles sont appelés nœuds internes. Un chemin est une suite de nœuds consécutifs de la racine vers une feuille.

Selon une caractéristique particulière, ladite étape de détermination dudit au moins un ordonnancement {OrdEi} de ladite au moins une propriété comprend :

- une étape de calcul, à partir de l'ensemble d'évènements {Ei}, pour chacune de ladite au moins une propriété, d'au moins une donnée statistique de variabilité des valeurs de ladite au moins une propriété ;
- une étape de détermination de l'ordonnancement {OrdEi} de ladite au moins une propriété en fonction de ladite au moins une donnée statistique de variabilité de sorte que les propriétés sont ordonnées par ordre croissant de variabilité.

Selon une caractéristique particulière, ladite étape de construction de la structure de données arborescente Tx comprend :

- une étape de création d'une structure arborescente courante en fonction d'un premier sous-ensemble d'évènements de l'ensemble d'évènements {Ei} et dudit au moins un ordonnancement {OrdEi} de ladite au moins une propriété ;
- optionnellement, une étape de réduction du nombre de nœuds de la structure arborescente courante en fonction d'un deuxième sous-ensemble d'évènements de l'ensemble d'évènements {Ei}.

Selon une caractéristique particulière, l'étape de création de la structure arborescente courante comprend, pour chaque évènement du premier sous-ensemble d'évènements et pour chaque propriété ordonnée selon ledit au moins un ordonnancement {OrdEi} :

- recherche, au niveau d'un nœud courant de la structure arborescente courante, d'un nœud fils correspondant à la valeur courante d'une propriété courante de l'évènement ;
- lorsqu'aucun nœud correspondant n'est identifié lors de ladite recherche, création d'un nouveau nœud au sein de ladite structure arborescente, la valeur du nouveau nœud étant fonction de ladite valeur courante pour ladite propriété ;
- lorsque ladite recherche permet d'identifier un nœud fils, passage à la propriété suivante de l'évènement.

Selon une caractéristique particulière, l'étape de réduction du nombre de nœuds de la structure arborescente courante en fonction du deuxième sous-ensemble d'évènements de l'ensemble d'évènements {Ei} comprend, pour chaque évènement du premier sous-ensemble d'évènements et pour chaque propriété ordonnée selon ledit au moins un ordonnancement {OrdEi} :

- recherche, au niveau d'un nœud courant de la structure arborescente courante, d'un nœud fils correspondant à la valeur courante d'une propriété courante de l'évènement ;
- lorsqu'aucun nœud correspondant n'est identifié lors de ladite recherche, suppression de tous les nœuds fils du nœud courant ;
- lorsque ladite recherche permet d'identifier un nœud fils, passage à la propriété suivante de l'évènement.

Selon une caractéristique particulière, le procédé étant mis en œuvre par l'intermédiaire d'un dispositif informatisé de détection comprenant au moins une unité de calcul et une mémoire, le procédé de détection d'anomalies comprend les étapes suivantes :

- Obtention d'au moins une structure de données arborescente Tx de détection d'anomalies construit par l'intermédiaire du procédé de construction tel que décrit précédemment, à l'aide d'un ensemble d'évènements {Ei} 1<i<n ; et
- Pour chaque évènement Ej, d'un ensemble d'évènements {Ej} 1<j<m, détermination d'une conformité de l'évènement Ej à au moins un chemin du modèle arborescent de détection.

Selon une caractéristique particulière, ladite étape de détermination d'une conformité de l'évènement Ej à au moins un chemin du modèle arborescent de détection détermine qu'une anomalie est présente lorsque, pour ledit évènement Ej, il n'existe pas de chemin dans le modèle arborescent de détection associé à cet évènement entre un nœud racine et une feuille du modèle arborescent de détection.

Selon une caractéristique particulière, ladite étape de détermination d'une conformité de l'évènement Ej à au moins un chemin du modèle arborescent de détection comprend au moins une itération :

- d'une étape de recherche, à partir d'un nœud courant du modèle arborescent de détection, d'un nœud fils Nk par comparaison d'une valeur valjkx d'une propriété Propk courante de l'évènement Ej avec au moins une valeur valk d'un nœud fils Nk correspondant du modèle arborescent de détection ;
- d'une étape d'émission d'un signal représentatif d'une anomalie lorsque l'étape de recherche ne permet pas d'identifier un nœud fils correspondant.

Selon une caractéristique particulière, l'étape de recherche d'un nœud fils à partir d'un nœud courant nécessitant de comparer une valeur valjkx d'une propriété Propk courante de l'évènement Ej avec chacune des valeurs valk des nœuds fils Nk, comprend la détermination d'une fonction de comparaison et la mise en œuvre de la fonction de comparaison entre la valeur valjkx de la propriété Propk courante de l'évènement Ej et ladite au moins une valeur valk de chaque nœud fils Nk.

Selon un autre aspect, l'invention se rapporte également à un dispositif de construction d'un modèle de détection d'anomalies. Un tel dispositif comprend au moins une unité de calcul et une mémoire. Un tel dispositif est configuré pour mettre en œuvre au moins une itération des étapes suivantes :

- obtention d'un ensemble d'évènements {Ei}, 1<i<n, chaque évènement de l'ensemble d'évènements comprenant au moins une propriété et au moins une valeur correspondante, un évènement étant une instance de données collectées auprès d'un système ;
- détermination pour ledit ensemble d'évènements, d'au moins un ordonnancement {OrdEi} de ladite au moins une propriété, ledit ordonnancement {OrdEi} étant représentatif d'une variabilité de ladite au moins une valeur correspondant à ladite au moins une propriété, de sorte que la propriété dont les valeurs varient le moins a un ordre inférieur à la propriété dont les valeurs varient le plus ;
- construction du modèle de détection sous la forme d'une structure de données arborescente Tx, dans laquelle des nœuds sont formés à partir d'au moins certaines des valeurs des propriétés des évènements de l'ensemble d'évènements, , à l'aide dudit ensemble d'évènements {Ei} et selon ledit au moins un ordonnancement {OrdEi} de ladite au moins une propriété.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus. Ce programme peut utiliser n'importe quel langage de programmation, et être sous la forme de code source, code objet, ou de code intermédiaire. La technique proposée vise aussi un support d'informations lisible par un processeur de données, et comportant des instructions d'un programme tel que mentionné ci-dessus. Le support d'informations peut être n'importe quelle entité ou dispositif capable de stocker le programme, par exemple un moyen de stockage, un circuit microélectronique, ou encore un moyen d'enregistrement magnétique ou optique. D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question. Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels. Chaque composante du système précédemment décrit met bien entendu en œuvre ses propres modules. Les différents modes de réalisation mentionnés ci-dessus sont combinables entre eux pour la mise en œuvre de la technique proposée.

## Brève description des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :

- La [Fig.1] illustre un procédé de création d'un modèle de détection d'anomalies selon la divulgation ;
- Les figures 2 à 4 illustrent une version simplifiée de la création d'un modèle ;
- La [Fig.5] illustre schématiquement un procédé de détection d'anomalies selon la divulgation ;

- La [Fig.6] illustre schématiquement un dispositif de création d'un modèle de détection d'anomalies selon la présente.

Description d'un mode de réalisation

Un objet de la présente divulgation est de proposer une technique de détection d'anomalies dans un système informatique, en particulier dans des systèmes embarqués dotés d'un système d'exploitation, par exemple des calculateurs automobiles (ECU) ou des ordinateurs de bord de satellites (OCB). Cette technique repose sur l'utilisation de modules d'observabilité pour collecter des événements de différentes natures et observer le comportement du système sous divers angles complémentaires. Elle permet de constituer des modèles d'intelligence artificielle (i.e. de « machine learning » - apprentissage machine plus particulièrement) auditables, offrant ainsi une compréhension plus précise des événements considérés comme normaux ou anormaux par le modèle. En cas de détection d'une anomalie, la technique fournit une explication détaillée de l'événement jugé anormal. Cette approche améliore la capacité à détecter des anomalies comportementales, des nouveautés et des attaques, tout en rendant les algorithmes d'apprentissage explicables et transparents pour les utilisateurs. La technique de la divulgation peut être mise en œuvre sur les flux d'évènements et/ou des bases de données d'évènements comprenant des centaines de milliers d'évènements différents. Cette technique est simple et efficace et conserve une explicabilité des résultats fournis. Compte tenu des volumes de données traités, la mise en œuvre de cette technique manuellement est impossible et ne résoudrait pas un problème technique additionnel de rapidité de réaction en cas de découverte ou de levée d'anomalies.

La technique objet de la divulgation comprend deux aspects. Le premier aspect se rapporte à l'apprentissage de modèles et le deuxième se rapporte à la détection d'évènements à partir des modèles utilisés. Un avantage particulier de la technique proposée est sa rapidité, tant à l'apprentissage qu'à la détection ainsi qu'une certaine économie dans l'utilisation de ressources. Globalement, la technique proposée comprend une ou plusieurs itérations de l'une au moins des phases suivantes :

- apprentissage de durée prédéterminée, permettant d'obtenir un ou plusieurs modèles de détection, chaque modèle se présentant sous la forme d'une structure arborescente (arbre) ;
- détection, consistant à détecter des anomalies dans les évènements soumis à partir des modèles de détection constitués lors de la phase d'apprentissage.

À moindre coût, il est également possible de relancer une phase d'apprentissage de manière périodique afin de prendre en compte d'éventuels changements de comportements du système.

Le premier aspect consiste en la construction d'un ou de plusieurs modèles adaptés aux flux d'évènements à analyser. Globalement, on considère plusieurs types d'évènements. Chaque type d'évènement est associé à un modèle particulier. Chaque type d'évènement, fait donc l'objet d'un apprentissage d'un modèle. Un type d'évènement est associé à un flux d'évènements. Dans certaines situations, un flux d'évènements peut comprendre plusieurs types, auquel cas il peut y avoir plusieurs modèles ou bien un seul modèle de détection pour les différents types d'évènements du flux d'évènements.

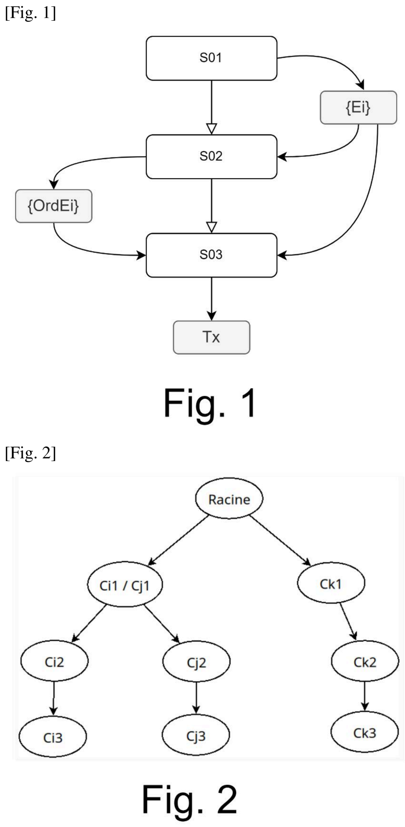

La [Fig.1] illustre globalement le procédé de création d'un modèle de détection d'anomalies. Un tel procédé de construction d'un modèle de détection d'anomalies, comprend ainsi une ou plusieurs itérations des étapes suivantes :

- obtention S01 d'un ensemble d'évènements {Ei}, 1<i<n, chaque évènement de l'ensemble d'évènements comprenant des propriétés et des valeurs correspondantes, un évènement étant une instance de données collectées auprès d'un système (des logs, des résultats d'exécutions, des traces réseaux, etc.) ;
- détermination S02 pour l'ensemble d'évènements {Ei}, d'un ordonnancement {OrdEi} des propriétés, l'ordonnancement {OrdEi} étant représentatif de la variabilité des valeurs correspondant aux propriétés, de sorte que la propriété dont les valeurs varient le moins a un ordre inférieur à la propriété dont les valeurs varient le plus ; « inférieur » signifie que l'ordre de la propriété dont les valeurs varient le moins est par exemple « 1 » alors que l'ordre de la propriété dont les valeurs varient le plus est égal au nombre de propriétés (par exemple 10 s'il y a 10 propriétés) ;
- construction S03 à l'aide de l'ensemble d'évènements {Ei}, d'une structure de données arborescente Tx, dans laquelle des nœuds sont formés à partir de tout ou partie des valeurs des propriétés des évènements de l'ensemble d'évènements, selon l'ordonnancement {OrdEi} des propriétés : la propriété dont les valeurs varient le moins (i.e. fonction de l'ordonnancement) disposera dans la structure arborescente d'un nœud d'arbre directement relié à la racine de l'arbre.

Ainsi, pour créer un modèle de détection d'anomalies, une caractéristique particulière de la divulgation consiste préalablement à la construction des modèles, à définir la constitution des évènements du flux d'évènements, cette constitution comprenant par exemple la mise en œuvre d'une définition d'une liste de propriétés (par exemple des champs) des évènements dont les occurrences apparaissent dans le flux d'évènements. Les évènements peuvent se présenter sous la forme de liste tabulaire de champs, un évènement comprenant alors une suite ordonnée de champs séparés par un espace ou par un autre caractère de séparation (« , », « ; », « \ » ; « / » ; « tabulation », « changement de ligne », etc.) par exemple, ou une combinaison de caractères de séparation. Les évènements peuvent se présenter sous une forme arborescente, définissant des structures de données particulières, qui sont fonction des contextes (par exemple les évènements peuvent prendre des formes arborescentes ou des formes de listes imbriquées (« nested list » en anglais)).

Les propriétés ou champs des évènements sont, selon la présente, ordonnées, manuellement ou automatiquement. Cet ordonnancement {OrdEi} tient compte de l'entropie des propriétés. Plus particulièrement, l'entropie de propriétés se rapporte à la variabilité des données dans les évènements. Par exemple, dans le cas d'évènements tabulaires issus d'exécutions de processus, la liste des propriétés de l'évènement peut être la suivante :

[date] ;[heure] ;[nom du processus] ;[pid] ;[code_evt] ;[value0] ; [value1] ; [value2] ;

Avec : [date] représente la date de l'évènement ; [heure] représente l'heure de l'évènement ; [nom du processus] est le nom commun du processus ; [pid] est l'identifiant système du processus ; [code_evt] est un code de l'évènement ; [value0], [value1] [value2] sont des valeurs explicatives ou indicatives de l'évènement.

L'entropie de propriétés représente ainsi le degré de variabilité des valeurs associées aux propriétés. La date et l'heure par exemple varient dans le temps, tout comme le « pid » qui peut prendre une valeur aléatoire à chaque exécution de processus, alors que le [processus name] et le [code_evt] et les [value0], [value1], [value2] associées présentent moins de variabilité et permettent de caractériser un ensemble potentiellement restreint d'invariants. En d'autres termes, la date, l'heure ou le pid, sans pré-traitement particulier, présentent une pertinence faible ou nulle dans l'identification d'évènements anormaux. Ainsi, à l'issue de la mise en œuvre de l'étape d'ordonnancement {OrdEi}, l'ordre des propriétés qui est associé à cette typologie d'évènement est par exemple :

[processus name] ;[code_evt] ;[value0] ;[value1] ;[value2] ;[pid] ;[date] ;[heure] ;

On peut noter également que, selon la présente, cette phase peut comprendre une suppression de propriétés, lorsqu'il est établi que ces propriétés ne rapportent aucune information susceptible d'identifier une anomalie.

L'ordonnancement {OrdEi} des propriétés peut être réalisé de manière automatique, par un module de détermination d'entropie, qui calcule des statistiques de variabilité des valeurs associées aux propriétés en utilisant une base de données d'évènements (cette base de données d'évènements étant utilisée pour l'apprentissage des modèles, voir infra). Les statistiques sont calculées sur tout ou partie des évènements de la base de données d'évènements (par exemple la partie qui est utilisée pour l'apprentissage). Ce module peut proposer l'ordonnancement {OrdEi} à un utilisateur, préalablement à la construction du ou des modèles ou définir cet ordonnancement {OrdEi} de lui-même.

Cet ordonnancement {OrdEi} de propriétés peut être réalisé pour tous les types d'évènements différents que peut contenir le flux d'évènements qui est analysé. Il y a donc un ordonnancement {OrdEi} de propriétés par type d'évènement, lorsque cela est nécessaire (c'est-à-dire lorsqu'un flux comprend plusieurs types d'évènements).

Muni de cet ordonnancement {OrdEi}, la construction du modèle est mise en œuvre en deux étapes : une étape de construction d'un modèle (initial) et une étape optionnelle de nettoyage de ce modèle initial, conduisant à l'obtention du modèle définitif (en cas d'absence de l'étape de nettoyage, le modèle initial constitue le modèle définitif). Ces deux étapes sont mises en œuvre à partir d'une base de données d'évènements ou d'un flux d'évènements. Les figures 2 à 4 illustrent une version simplifiée de la création d'un modèle, à des fins de compréhension et de clarté uniquement, sans que ces exemples ne puissent constituer une limitation de la portée de la divulgation. On trouvera en annexe des modèles plus complets que ceux présentés dans la description. On considère qu'après la phase d'ordonnancement {OrdEi} des propriétés, un évènement $E_i$, $1 \le i \le n$ se présente sous la forme d'un ensemble de champs de données $E_i = (C_{i1}, C_{i2}, ..., C)$, chaque champ correspondant à une propriété et comprenant une valeur. Un évènement $E_i$ peut être directement identique à celui extrait du flux d'évènements, ou bien subir une transformation préalable, notamment en fonction de l'ordonnancement {OrdEi}. Les caractéristiques relatives à cette éventuelle étape de transformation des évènements d'origine en évènements à traiter sont décrites infra, après les étapes de construction du modèle et de test de ce modèle.

Ainsi, muni d'un flux ou d'une base de données d'évènements, le procédé de construction d'un modèle consiste à créer un arbre de décision à partir d'une partie de l'ensemble d'événements du flux (observés pendant une période d'apprentissage prédéterminée) ou d'une partie de la base de données (récoltés) d'évènements. La portion des données disponibles utilisées pour l'apprentissage de l'arbre dépend d'un paramètre d'apprentissage, qui est un paramètre de construction des modèles.

Chaque événement est représenté par une suite ordonnée de champs de données $E_i = (C_{i1}, C_{i2}, ..., C)$. Un arbre initial Tx est construit en insérant des chemins correspondant aux événements observés. Chaque nœud $N_i$ de l'arbre représente une valeur $val_i$ du champ $C_i$ des événements, et les chemins dans l'arbre représentent les séquences de champs des événements $E_i = (C_{i1}, C_{i2}, ..., C)$. En cas de pluralité de types d'évènements, un arbre peut être construit par type d'évènements ou un même arbre peut être construit pour tous les types d'évènements en utilisant par exemple les types d'évènement comme nœuds de profondeur 1, permettant de constituer des sous-arbres pour chaque type d'évènement.

Les nœuds peuvent être de nature catégorielle (chaîne de caractères) ou numérique.

Les nœuds catégoriels sont créés lorsque les valeurs des champs ne correspondent pas à des nœuds existants identiques ou similaires. La casse peut être utilisée comme paramètre de comparaison (Majuscule/Minuscule). La similarité peut être utilisée comme paramètre de comparaison (i.e. les valeurs ne sont pas identiques, mais similaires, par exemple dans leur expression ou leur signification). Ces paramètres permettent de tenir compte d'une certaine « variabilité » dans le processus de développement de certains programmes applicatifs, qui peuvent conduire plusieurs développeurs à ne pas adopter des standards de « reporting » d'évènements qui sont rigoureusement identiques : cela est utile par exemple dans la catégorisation de logs issus d'applicatifs utilisant des librairies développées par plusieurs personnes différentes). Ces paramètres de comparaison peuvent être intégrés dans chaque nœud de l'arbre (permettant ainsi de disposer de paramètres différents en fonction des nœuds) ou bien être des paramètres généraux.

Les nœuds numériques sont associés à des statistiques telles que la moyenne et l'écart-type des valeurs numériques observées. Lorsque la valeur $val_j$ d'un champ $C_j$ à une profondeur j donnée est une valeur numérique, ce champ $C_j$ est, selon la divulgation, représenté par un seul noeud $N_j$ sur un chemin quelle que soit la valeur numérique reçue. Par exemple, les évènements dont les valeurs sont les suivants (« Alpha », 4, « Beta ») et (« Alpha », 5, « Gama ») partagent le même sous-chemin (« Alpha », <valeur numérique>) dans l'arbre. Lors de la constitution de l'arbre, un nœud de type valeur numérique sur un chemin donné est ainsi associé à une moyenne et à un écart-type calculés à partir de toutes les valeurs numériques observées.

Tous les chemins associés aux évènements du jeu d'apprentissage sont ainsi insérés dans l'arbre.

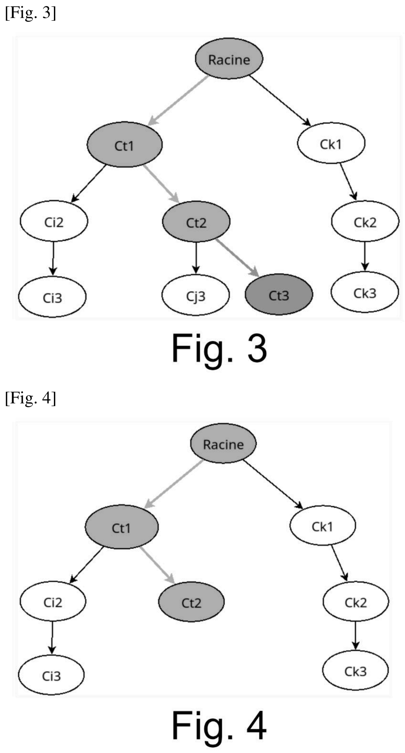

À titre d'exemple, pour des évènements $E_i$, $E_j$ et $E_k$, tel qu'illustré en figure 3, contenant respectivement les champs $E_i = (C_{i1}, C_{i2}, C_{i3})$, $E_j = (Cj1, Cj2, Cj3)$, $E_k = (Ck1, Ck2, Ck3)$, on obtient l'arbre illustré en supposant que les valeurs des champs Cil et Cjl sont identiques.

Ainsi, selon la présente, les évènements peuvent partager des chemins communs lorsqu'ils partagent un même préfixe (i.e. lorsque leurs premiers champs sont identiques). En l'occurrence, dans l'arbre représenté en figure 3, les valeurs de Ci1 et Ci1 sont identiques donc les évènements $E_i$ et $E_j$ partagent le même sous-chemin de la racine vers Ci1/Cj1 et leurs chemins diffèrent à partir de Ci2 et Cj2.

Par extension, lorsque $E_i$ et $E_j$ sont identiques, ils sont représentés par un même chemin dans l'arbre du modèle.

En fonction des conditions de mise en œuvre opérationnelles, le modèle créé peut être associé à un taux de faux négatifs élevé (absence de détection d'anomalie), ou à un taux de faux positifs élevé (surapprentissage). Ceci peut par exemple être le cas lorsque la variabilité du flux ou de la base de données d'évènements ayant servi à créer le modèle est réduite ou que le nombre d'évènements à disposition est faible (lorsque l'on a restreint la base d'apprentissage en supprimant les évènements à forte variabilité ou les champs à forte variabilité de ces évènements par exemple).

Une étape de nettoyage du modèle peut être mise en œuvre après la création de la structure arborescente initiale Tx (i.e. l'arbre initial). Cette étape de nettoyage utilise la partie du flux ou de la base de données d'évènements qui n'a pas été utilisée pour la création du modèle initial. Dans la phase de nettoyage, tous les évènements associés à cette phase sont utilisés pour nettoyer l'arbre. De la même façon que pour la phase de constitution du modèle, l'algorithme consiste à vérifier si chaque évènement $E_k = (Ck1, Ck2, Ck3)$ est présent dans le modèle et à ne conserver que les préfixes de chemin connus.

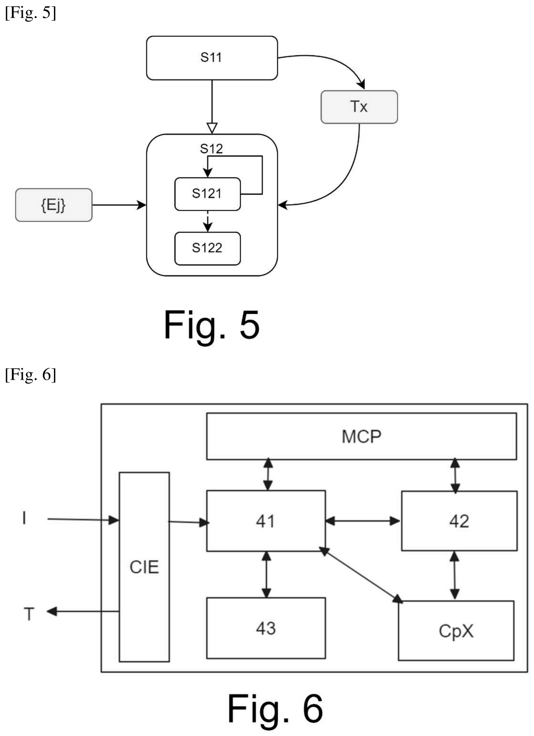

Considérons par exemple l'évènement $E_t = (Ct1, Ct2, Ct3)$ et l'exemple de modèle représenté en Figure 3. On considère que les valeurs des champs de l'évènement Et sont les suivantes : Ct1 = Ci1 = Cj1 ; Ct2 = Cj2 et Ct3 ≠ Cj3. La figure 4 illustre la situation rencontrée lors de la phase de nettoyage. Le chemin pour les valeurs des champs (Ct1, Ct2) existe bien dans le modèle constitué mais le nœud correspondant à la valeur du champ Ct3 n'existe pas. La phase de nettoyage consiste alors à supprimer le nœud Cj3 du modèle, ce qui conduit au modèle illustré en figure 5. Cette solution est efficace et permet de pallier le surapprentissage du modèle, à moindre coût notamment computationnel. On comprend cependant que si une telle solution était adoptée pour l'ensemble des nœuds de l'arbre, un évènement singulier qui ne contiendrait aucun préfixe commun avec l'arbre du modèle entraînerait potentiellement la suppression de l'ensemble des nœuds de l'arbre. Aussi, lorsque de tels évènements singuliers sont rencontrés, des contraintes sur cet effet de nettoyage sont appliquées. La phase de nettoyage s'appuie ainsi sur un hyperparamètre d(depth) correspondant à la profondeur minimale en dessous de laquelle le nettoyage s'arrête. Par exemple, si d = 3, le noeud de profondeur 3 n'est pas supprimé. En revanche si d < 3, (par exemple 2) les nœuds de profondeur 3 et supérieures, sur ce chemin, sont bien supprimés.

Pour les nœuds de type valeurs numériques rencontrés sur le chemin lors de la phase de nettoyage, le z-score associé à la valeur numérique est calculé :

$$Z = \frac{(x-\mu)}{\sigma}$$ , ou x est la valeur du champ, $\mu$ est la moyenne et $\sigma$ est l'écart type.

Si la valeur absolue z V est supérieure à un paramètre Zmax, la valeur est considérée comme anormale et le nœud et l'ensemble du sous-chemin (les nœuds fils) qui en découle sont supprimés. Comme dans le cas de la comparaison de chaîne de caractères, le paramètre Zmax peut être un paramètre général (hyperparamètre), ou un paramètre dépendant du nœud de l'arbre, pour plus de souplesse.

Le modèle ainsi obtenu peut être analysé avec des outils permettant d'afficher la structure de l'arbre. Cela permet de rendre le modèle auditable, contrairement à la plupart des algorithmes d'apprentissage machine. De plus, la technique proposée est relativement peu consommatrice de ressources au regard d'algorithmes d'apprentissage profond par exemple.

Le deuxième aspect se rapporte à l'utilisation, en conditions opérationnelles, d'un ou de plusieurs modèles précédemment construits, pour analyser les évènements issus d'un flux prédéterminé et détecter des anomalies dans ce flux. Comme explicité précédemment un flux d'un type d'évènement donné (par exemple un flux d'évènements d'exécution de processus, ou un flux de paquets échangés sur un réseau de communications) est associé à un modèle donné dont la structure dépend du type d'évènement.

La [Fig.5] illustre globalement la détection d'anomalies à l'aide d'une structure de données arborescente. Le procédé de détection d'anomalies comprend les étapes suivantes :

- obtention (S11) d'au moins une structure de données arborescente Tx de détection d'anomalies construit par l'intermédiaire du procédé de construction décrit précédemment, à l'aide d'un ensemble d'évènements {Ei} 1<i<n ; et
- pour chaque évènement Ej, d'un (deuxième) ensemble d'évènements {Ej} 1<j<m, détermination (S12) d'une conformité de l'évènement Ej à au moins un chemin du modèle arborescent de détection, qui comprend au moins une itération :
- d'une étape de recherche, à partir d'un nœud courant, d'un nœud fils Nk par comparaison (S121) d'une valeur valjkx d'une propriété Propk courante de l'évènement Ej avec au moins une valeur valk d'un nœud fils Nk correspondant du modèle arborescent de détection ;
- d'une étape d'émission (S122) d'un signal représentatif d'une anomalie lorsque l'étape de recherche (S121) ne permet pas d'identifier un nœud fils Nk correspondant.

Comme exemplifié par la suite, l'étape de comparaison (S121) d'une valeur valjkx d'une propriété Propk courante de l'évènement Ej avec au moins une valeur valk d'un nœud Nk comprend une détermination d'une fonction de comparaison et la mise en œuvre de la fonction de comparaison entre la valeur valjkx de la propriété Propk courante de l'évènement Ej et ladite au moins une valeur valk du nœud Nk.

Dans un exemple de réalisation, chaque flux est traité par un module de détection. Un module de détection est associé à un modèle de détection d'anomalies (qui est créé selon la méthodologie décrite supra). Le module de détection est un module logiciel qui prend en entrée le flux d'évènements et utilise ces évènements et son modèle pour détecter des anomalies dans le flux. Il peut être exécuté en arrière-plan, sous la forme d'un processus et traiter les évènements au fur et à mesure de leur arrivée. Il peut aussi, dans d'autres situations, être exécuté à la demande, par exemple pour analyser des ensembles d'évènements enregistrés dans un fichier.

Dans le cadre de la mise en œuvre de la détection, il peut potentiellement advenir qu'un flux comprenne des évènements de différents types, l'analyse d'un évènement dans un flux, peut nécessiter une détermination préalable du modèle associé en fonction du type de l'événement. Plusieurs méthodes de détermination des différents types d'évènements au sein du flux peuvent être mises en œuvre, soit directement par le module de détection, soit en amont du traitement effectué par le module de détection. Parmi ces méthodes de détermination de type d'évènement, on retrouve par exemple le test de valeurs, ou encore l'utilisation de modules de tests spécifiques.

Quoi qu'il en soit postérieurement à cette éventuelle étape de sélection d'un modèle à utiliser, une étape d'inférence du modèle est mise en œuvre. Dans cette étape d'inférence, les évènements issus du flux d'évènements sont fournis au modèle (par exemple en fonction de leurs types, comme exposé précédemment) et chaque évènement d'un type donné est soumis au modèle du même type précédemment constitué (ou soumis à un modèle global pour tous les types lorsqu'un tel modèle est implémenté). Ainsi, avec le modèle constitué à l'issue de la phase de nettoyage, un évènement $E_d = (C_{d1}, C_{d2}, ..., C_{dn})$ est considéré comme normal s'il existe un entier $k(k \leq n)$ tel que le chemin $C_k = (C_{d1}, C_{d2}, ..., C_{dk})$ existe dans l'arbre et $C_{dk}$ est une feuille de l'arbre.

Lorsqu'un nœud $N_i$ de l'arbre est de type « chaîne de caractères », la valeur $val_i$ de ce nœud $N_i$ coïncide avec la valeur $C_{di}$ du chemin $C_k$ si les chaînes de texte sont égales (c'est-à-dire $val_i = C_{di}$). Dans cette comparaison, la casse (c'est-à-dire la présence de caractères majuscules ou minuscules) peut être une source pour la détermination de l'inégalité entre deux chaînes de caractères (en d'autres termes la comparaison peut être sensible à la casse, en fonction des hyperparamètres des modèles et des éventuels hyperparamètres des nœuds eux-mêmes : le nœud peut ainsi, par exemple, porter en lui-même le paramètre de comparaison qui lui est appliqué, comme explicité précédemment).

Lorsqu'un nœud $N_j$ de l'arbre est de type valeur numérique, la valeur $val_j$ de ce nœud $N_j$ et la valeur $C_{dj}$ du chemin $C_k$ de l'évènement à tester sont utilisées pour calculer la valeur absolue du z-score. Si elle est inférieure à Zmax, la valeur $C_{dj}$ du chemin $C_k$ correspond avec la valeur $val_j$ de ce nœud $N_j$ de l'arbre.

Dans les deux cas (chaîne ou valeur numérique), s'il advient que la valeur du champ du chemin de l'évènement ne correspond pas avec la valeur du nœud de l'arbre, le chemin est considéré comme divergent et l'évènement est considéré comme (au moins partiellement) anormal.

Le résultat de l'inférence conduit à indiquer à un utilisateur si l'évènement analysé est normal ou anormal (ou partiellement anormal quand une notation partielle est attribuée aux chemins). Lorsque l'évènement est considéré comme anormal, le modèle fournit :

- une liste des champs « normaux » correspondant au sous-chemin parcouru jusqu'à obtenir une divergence par rapport au modèle ;
- au moins une donnée associée au champ anormal, à savoir son nom, sa valeur et/ou sa profondeur dans l'arbre et optionnellement toutes les valeurs normales observées à cette profondeur de l'arbre.

Les données fournies par le modèle peuvent ensuite être utilisées par une interface homme-machine d'un logiciel pour fournir des informations relatives à l'anomalie rencontrée d'une part et pour expliquer en quoi l'évènement est considéré comme anormal, d'autre part. Ceci peut être effectué notamment en formulant une explication, éventuellement textuelle, sur l'anomalie, telle que « la valeur de ce champ devrait être comprise entre 'x' et 'y'. Or la valeur présente est 'z' » ou encore « la valeur de ce champ devrait être une valeur dans un ensemble E de valeurs or la valeur présente est 'z' ».

Un aspect additionnel de la divulgation se rapporte à la gestion des faux-positifs. En effet, comme dans tout système complexe, il est envisageable, voire fréquent que le comportement du système évolue au cours du temps, par exemple lorsque le système subit une évolution matérielle (ajout, remplacement de matériels ou de modules par exemple) ou une évolution comportementale (modification du comportement du système pour s'adapter à des situations nouvelles. Il se peut également que les données utilisées pour effectuer l'apprentissage (e.g. les évènements de la base d'apprentissage) n'aient pas contenu suffisamment de diversité pour déterminer tous les évènements considérés comme normaux. Dans une telle situation, la détection d'anomalies peut conduire à des faux-positifs, i.e. des anomalies correspondant à des évènements légitimes. Dans une telle situation, les données d'anomalies fournies par le modèle peuvent être traitées sous forme d'exceptions grâce à une liste blanche.

Selon la divulgation, dans un premier exemple, une liste blanche peut être initialisée dans une structure de données séparée de l'arbre de décision, par exemple sous la forme de règles exploitant la logique combinatoire (ET, OU, NON) et constituée d'expressions, notamment conditionnelles, cette structure de données est utilisée par un module s'interfaçant avec les données d'anomalie fournies par le modèle pour déterminer si l'anomalie fournie doit être traitée (par exemple fournie à l'utilisateur pour classification). Ainsi, une liste blanche contient des éléments correspondant à des règles flexibles modifiables par un utilisateur. Un exemple de règle serait : « si le champ A vaut X et le champ B vaut Y et le champ C ne vaut pas Z ou le champ D vaut U, alors, l'évènement est considéré comme légitime ».

Dès lors, lors de l'inférence, ces anomalies associées à des règles en liste blanche peuvent avantageusement faire l'objet d'un traitement particulier (par exemple remontée de l'anomalie avec un indicateur particulier), de sorte que l'utilisateur en charge puisse à tout instant effectuer une correction éventuelle des règles en liste blanche (utile dans le cas où une classification en liste blanche résulte d'une mauvaise évaluation).

Selon la divulgation, dans un autre exemple, pouvant être appliqué à certains cas particuliers ne nécessitant pas d'expressions conditionnelles, une liste blanche peut être initialisée en ajoutant des nœuds spécifiques WLN à l'arbre de décision : ces nœuds spécifiques peuvent être marqués à l'aide d'une propriété particulière du nœud, permettant d'indiquer que ce nœud fait partie d'une « exception » à l'anomalie. Un avantage de cette mise en œuvre est que lors de l'entrainement suivant qui est effectué sur le modèle, le marquage de ces nœuds issus d'une classification manuelle de l'utilisateur peut être utilisé pour vérifier (i.e. confirmer ou infirmer) la classification manuelle qui a été effectuée. Lorsqu'à l'issue du réentrainement, il apparait que les nœuds spécifiques WLN ne sont pas atteints par les évènements fournis pour l'entrainement, un signal représentatif d'une alarme peut être émis pour ces nœuds spécifiques et l'utilisateur peut être informé soit d'une probable mauvaise classification des anomalies ou d'une inadéquation du jeu de test par exemple.

La généricité de la méthode de la divulgation permet de l'appliquer à de multiples cas d'usages parmi lesquels :

- la détection d'exécution de processus anormaux dans un système ;
- la détection de flux réseau anormaux initiés par un processus ;
- la détection d'accès à des fichiers inhabituels par un processus ;
- la détection de logs inhabituels dans un jeu de logs ;
- la détection d'alarmes inhabituelles (permettant par exemple de compléter un dispositif de détection par règles générant des faux-positifs, en identifiant les alarmes récurrentes légitimes des alarmes inhabituelles) ;
- la détection d'usurpation d'identité sur un bus de communication (par exemple sur un bus 1553 du domaine aéronautique) en identifiant un message usurpant l'identité d'un autre composant et intercalé dans le plan d'émissions normales de trames (anomalie susceptible d'être identifiée par le champ correspondant à l'intervalle de temps entre deux messages) ;
- la détection d'usurpation d'identité de composants hardware sur un bus par l'analyse des signaux électriques et notamment de certains champs théoriquement invariants déclinés à partir des propriétés des signaux électriques ;
- la maintenance prédictive, via l'identification d'évènements anormaux d'un système susceptibles de traduire une usure prématurée d'un système.

Certains de ces cas d'usages sont décrits par la suite et les modèles correspondants sont fournis en ANNEXE.

Détection de processus malveillants

À titre d'exemple, la technique de la divulgation permet de détecter l'exécution de processus inhabituels dans un système d'exploitation. Pour cela, un modèle constitué des champs suivants est créé :

[Tableaux 1]

| (0) container_name | Nom du container dans lequel est exécuté le processus le cas échéant |
|---|---|
| (1) image | Image du binaire à l'origine du démarrage du processus |
| (2) filename.0 | Premier élément du chemin du fichier exécuté (ex : / usr) |
| (3) filename.1 | Deuxième élément du chemin du fichier exécuté (ex : / usr / bin) |
| (4) filename . 2 | Troisième élément du chemin du fichier exécuté (ex : / usr / bin / cat) |
| (5) filename | Intégralité du chemin du chemin du fichier exécuté (ex : / usr / bin / cat) |
| (6) argv . 0 | Premier argument de la ligne de commande exécutée s'il existe (ex : cat) |
| (7) argv . 1 | Deuxième argument de la ligne de commande exécutée s'il exite ( ex : / etc / seedfence / seedfence.ini) |
| (8) argv . 2 | Troisième argument de la ligne de commande exécutée s'il existe |

En considérant un système sur lequel les commandes (évènements) suivantes sont périodiquement exécutées :

```
ping 8.8.8.$j -c 1 -W 1 #$j étant une valeur arbitraire
ls /usr/$dir #$dir prenant une valeur arbitraire
cat /etc/seedfence/seedfence.inilgrep enabled
docker run -d -p 8080:80 --name my-apache httpd:latest
container=$(docker pslgrep httpdlawk '{print $1}')
docker stop $container
docker rm $container
sleep 15
```

Le {modèle 1} de l'annexe est obtenu. Et on constate que les nœuds au-delà de la profondeur 6 correspondant aux chemins liés aux commandes ping et ls ont été supprimés lors de la constitution du modèle. Le modèle permet ainsi de capturer le fait que les commandes ping et ls sont exécutées périodiquement mais avec des paramètres variables. À noter que l'utilisation du nom du container comme premier champ dans le modèle permet de détecter un processus anormal démarrant dans un container.

Détection de flux réseau anormaux

Le procédé peut également s'appliquer à la détection de flux réseaux inhabituels dans un environnement réseau prédictible. Pour cela, un modèle constitué des champs suivants est créé :

[Tableaux2]

| (0) vlan | #Identifiant du VLAN le cas échéant |
|---|---|
| (1) inner_vlan | #Identifiant du 2e VLAN (802.1ad) le cas échéant |
| (2) proto | #Protocole (TCP, UDP, ICMP) |
| (3) service | #Type de service applicatif (HTTP, etc.) |
| (4) source.ip | #Adresse IP source |
| (5) destination.ip | #Adresse IP destination |
| (6) destination.port | #Port destination |

Un tel modèle permet ainsi d'identifier l'apparition de nouveaux dispositifs réseau communicant avec des adresses IP inhabituelles, l'apparition d'un nouveau service dans un environnement réseau donné, etc.

Détection d'anomalies sur un bus 1553

À titre d'exemple, le procédé permet de détecter différentes attaques sur un bus MIL-STD-1553 que l'on rencontre fréquemment dans le monde avionique militaire et spatial.

Le standard MIL-STD-1553 décrit un bus de données série multiplexé (half-duplex). Il décrit la présence de 2 bus (A et B) afin d'assurer la redondance, mais seulement un bus est actif à chaque instant. Il y a trois types d'équipements connectés au bus :

- Le gérant de bus ou « Bus Controller » (BC) qui orchestre les différents échanges sur le bus,
- Les abonnés ou « Remote Terminal » (RT) qui utilisent le bus pour communiquer. Il peut y en avoir jusqu'à 31 (limitation liée à l'adressage),
- Les moniteurs de bus ou « Bus Monitor » (BM) qui écoutent le bus. Il peut y en avoir plusieurs ou aucun.

Les échanges sur le bus respectent des trames prédéfinies ("Frames") conformément à une planification des échanges préétablie.

Parmi les attaques que l'on peut rencontrer sur un bus MIL-STD-1553 figure une attaque par usurpation du Bus Controller. Cette attaque suppose l'existence d'un « Remote Terminal » légitime mais compromis ou d'un boîtier matériel physique illégitime connecté au bus. L'attaque consiste à profiter d'un intervalle de temps où aucune communication n'a lieu sur le bus pour injecter un message et se faire passer pour le BC envoyant un ordre de récupération, d'écriture ou de transfert de données.

Un message échangé sur le bus peut être représenté avec la notation ci-dessous :

(1) 192.168.1.1:1234 (1) BCRT: 1-R-2-10 31-T-31-0 [10] (9260) ; les champs, dans leur ordre d'apparition étant les suivants :

- A : Numéro de message
- B : Adresse IP de l'adaptateur 1553 transmettant le message
- C : Port source de la trame réseau envoyée par l'adaptateur et comportant le message 1553
- D : Identifiant de l'adaptateur 1553 transmettant le message
- E : Type de message (BCRT, RTBC, RTRT, MODE) (*)
- F : Identifiant du RT dans la première commande
- G : Direction du message dans la première commande
- H : Sous-adresse associée à la première commande
- I : Nombre de mots dans la 1ère commande
- J : Identifiant du RT dans la deuxième commande
- K : Direction du message dans la deuxième commande
- L : Sous-adresse associée à la deuxième commande
- M : Nombre de mots dans la 2e commande
- N : Nombre de mots de données échangés globalement
- O : Intervalle de temps entre le message actuel et le précédent message

(*) Les types de message possible sont :

- BCRT : envoi de données du BC vers un RT
- RTBC : envoie de données d'un RT vers le BC
- RTRT : transfert de données d'un RT vers un autre RT
- MODE : envoi d'une commande vers un RT

À noter que la deuxième commande n'est utilisée que pour les messages de type RTRT et prend des valeurs par défaut dans les autres cas. Dans la suite, les valeurs associées à la deuxième commande ne sont pas notées lorsqu'il ne s'agit pas d'un message RTRT.

À titre d'exemple, considérons un bus 1553 constitué de 8 RTs et d'un BC avec la succession de messages suivants :

- (1) BCRT: 1-R-2-10 [10] (~9262) #Le BC envoie un ordre de réception de 10 mots de données au RT #1 à destination de l'adresse 2

- (2) BCRT: 2-R-6-20 [20] (~8562) #Le BC envoie un ordre de réception de 20 mots de données au RT #2 à destination de l'adresse 6
- (3) BCRT: 3-R-5-16 [16] (~8662) #...
- (4) BCRT: 4-R-9-25 [25] (~9362)
- (5) BCRT: 5-R-1-15 [15] (~8862)
- (6) BCRT: 6-R-3-18 [18] (~7562)
- (7) BCRT: 7-R-4-20 [20] (~8962)
- (8) BCRT: 8-R-7-30 [30] (~10062)
- (9) RTBC: 1-T-2-10 [10] (~7962) #Le BC envoie un ordre de transmission de 10 mots de données du RT #1 (sous-adresse 2) vers le BC
- (10) RTBC: 2-T-6-12 [12] (~8262) #Le BC envoie un ordre de transmission de 12 mots de données du RT #2 (sous-adresse 6) vers le BC
- (11) RTBC: 3-T-5-8 [8] (~8845) #...
- (12) RTBC: 4-T-9-20 [20] (~8963)
- (13) RTRT: 4-R-3-32, 5-T-8-32 [32] (~8762) #Le BC envoie un ordre de transfert de 32 mots de données du RT #5 (sous-adresse 8) vers le RT #4 (sous-adresse 3)
- (14) RTRT: 7-R-6-14, 6-T-5-14 [14] (~9562) #Le BC envoie un ordre de transfert de 14 mots de données du RT #6 (sous-adresse 5) vers le RT #7 (sous-adresse 6)
- (15) RTRT: 5-R-1-25, 8-T-4-25 [25] (~9262) #...

Pour détecter des attaques sur le bus 1553, un modèle constitué des champs suivants est créé :

[Tableaux3]

| (0) source.ip | # (Champ B) Adresse IP source de l'adaptateur 1553 transmettant le message envoyé sur le bus |
|---|---|
| (1) source.port | # (Champ C) Port source de l'adaptateur 1553 |
| (2) device_id | # (Champ D) Identifiant de l'adaptateur 1553 |
| (3) msg_type | # (Champ E) Type de message (BCRT, RTBC, RTRT, MO DE...) |
| (4) command1.rt_address | # (Champ F) Adresse du RT dans la première commande du message |
| (5) command 1.direction | # (Champ G) Direction du message (R: réception, T: transmission) dans la première commande du message |
| (6) command1.sub_address | # (Champ H) Sous-adresse définie dans la première commande |
| (7) command1.word_count | # (Champ I) Nombre de mots de données échangés |
| (8) command2.rt_address | # (Champ J) Adresse du RT dans la deuxième commande du message |
| (9) command2.direction | # (Champ K) Direction du message (R: réception, T: transmission) dans la deuxième commande du message |
| (10) command2.sub_address | # (Champ L) Sous-adresse définie dans la deuxième commande |
| (11) command2.word_count | # (Champ M) Nombre de mots de données échangés |
| (12) data_word_count | # (Champ N) Nombre de mots de données échangés globalement entre les composants |
| (13) inter_message_gap_time | # (Champ O) Intervalle de temps entre le message actuel reçu et le précédent message reçu (en microsecondes) |

On obtient ainsi le modèle {modele 2} dans l'annexe. On constate dans le modèle obtenu à la profondeur 13 que la moyenne d'intervalle de temps entre 2 messages est d'environ 8 à 10 ms (8266.11 μs par exemple) avec un écart-type entre de 0.2 et 0.3 ms.

Un attaquant peut ainsi profiter de cet intervalle de temps libre de 8 à 10 ms pour injecter un message malveillant en usurpant l'identité du BC.

Supposons par exemple qu'un attaquant injecte un ordre de récupération de données 8-T-12-30 pour extraire 30 mots de données de la sous-adresse 12 du « Remote Terminal 8 » entre les messages 8 et 9 :

(8) BCRT: 8-R-7-30 [30] (~10062) #Message légitime
(8') RTBC: 8-T-12-30 [30] (~5062) #Message malveillant
(9) RTBC: 1-T-2-10 [10] (~2962) #Message légitime

L'intervalle de temps entre le message 9 et le précédent message passe donc d'environ 7962 à 2962 µs.

Le message malveillant conduit ainsi à la détection de deux anomalies par le modèle :

- L'identification d'un message RTBC inhabituel concernant le RT #8 car le modèle a appris que seuls les dispositifs 1, 2, 3 et 4 étaient concernés par un ordre de transmission de données vers le BC (voir {modèle 2 d'Annexe} ;

L'anomalie remontée permet d'identifier que le chemin (1.2.3.4, 56514, 2, RTBC) est légitime mais que le champ (4) de valeur 8 (identifiant du RT) est inhabituel.

- L'identification d'un message RTBC 1-T-2-10 inhabituel au niveau du champ (13) car le modèle a appris que le message RTBC 1-T-2-10 est transmis habituellement avec un intervalle de temps moyen de 7981 µs et un écart-type de 247 µs.

En effet, le message est transmis 2962 µs après le précédent, ce qui correspond à un z-score de |2962 - 7981| / 247 - 20 qui est supérieur à 3 (Zmax).

Détection de dispositifs hardware malveillants

Par extension du cas d'usage précédent sur le bus 1553, il est possible de détecter un dispositif hardware illégitime connecté à un bus MIL-STD-1553 ou ARINC-429 en intégrant dans le modèle des champs relatifs à la dynamique des signaux électriques observées sur le bus et qui sont censés être invariants au cours du temps.

Par exemple, il est possible de prendre en compte :

- la pente moyenne de toutes les transitions entre les niveaux électriques bas (-5V, -11V, etc...) et les niveaux électriques haut (+5V, +11V...) observés lors de la transmission d'un message donné par un dispositif matériel ;
- la valeur moyenne du niveau électrique haut ;
- la valeur moyenne du niveau électrique bas ; etc.

Détection de spoofing sur un bus CAN

Le procédé permet également de détecter des attaques de type spoofing sur un bus CAN. Un module de détection est alors exécuté sur le boîtier connecté à un bus CAN pour lequel on cherche à déterminer si d'autres boîtiers sur le bus CAN usurpent sa propre identité. Les bus CAN sont très couramment utilisés dans le domaine automobile mais également dans l'aéronautique pour interconnecter les différents calculateurs ou capteurs du véhicule en limitant la quantité de câblage nécessaire.

Pour simplifier, un message CAN comporte les champs suivants :

- can_id : identifiant de la trame (champ d'arbitrage), propre au calculateur ;
- dlc : correspondant au nombre d'octets du message (Data Length Code) ;
- content : 0 à 8 octets de données.

Lorsque l'on utilise « socketcan » sous Linux® pour capturer les trames CAN émises ou reçues, il est possible d'extraire la direction de la trame (émission ou réception). On peut ainsi compléter les informations exploitées par l'algorithme avec le champ suivant : is_rx : indique si la trame est émise ou reçue par le calculateur.

On peut ainsi constituer un modèle avec les champs suivants :

[Tableaux4]

| (0) is_rx | #Indique si la trame est reçue ou émise par le calculateur |
|---|---|
| (1) can_id | #Identifiant de la trame CAN |
| (2) data_length | #Nombre d'octets de données |
| (3) content | #Octets de données en hexadécimal |

Si le calculateur sur lequel est exécuté le procédé a un ensemble d'identifiants CAN qui lui est propre, il est alors possible de détecter des tentatives d'usurpation sur le bus. En effet, si le calculateur X sur lequel est exécuté le procédé est le seul à émettre des trames CAN avec l'identifiant 0x123 de longueur 2 avec un contenu variable, le modèle capture ces informations sous la forme suivante :

```
(0) false
(1) 0x123
(2) 2
(0) true
(1) 0x456
(2) 8
...
```

Ainsi, en cas d'usurpation de l'identité du calculateur par un autre calculateur, le dispositif identifie des trames CAN avec les propriétés suivantes :

```
is_rx : true
can_id : 0x123
data_length : 2
```

Il est alors possible d'identifier immédiatement les identifiants des trames usurpées.

On présente, en relation avec la [Fig.6], une architecture simplifiée d'un dispositif électronique de création de modèle et ou de détection à l'aide d'un modèle créé, et apte à effectuer tout ou une partie du traitement tel que présenté précédemment. Un dispositif électronique de ce type comprend un premier module électronique comprenant une mémoire 41, une unité de traitement 42 équipée par exemple d'un microprocesseur, et pilotée par un programme d'ordinateur 43. Dans au moins un mode de réalisation, la présente technique est mise en œuvre sous la forme d'un ensemble de programmes installés en partie ou en totalité sur le dispositif électronique. Dans au moins un autre mode de réalisation, la présente technique est mise en œuvre sous la forme d'un composant dédié (CpX) pouvant traiter des données des unités de traitement et installé en partie ou en totalité sur le dispositif de sélection. Par ailleurs, le dispositif comprend également des moyens de communication (CIE) se présentant par exemple sous la forme de composants réseaux (Wi-Fi, 3G/4G/5G, filaire, RFID/ NFC, Bluetooth, BLE, LPWan, VLC, etc.) qui permettent au dispositif de recevoir des données, par exemple des flux d'évènements (I) en provenance d'entités connectées à un ou plusieurs réseaux de communication et de transmettre des données traitées (T), par exemple des signaux d'anomalies détectées, à de telles entités. Dans un exemple de réalisation, un tel dispositif comprend en outre des moyens de calculs (MCP), par exemple sous la forme d'un module matériel de détection dédié, qui sont utilisés pour effectuer des détections d'anomalies tel qu'exposé précédemment.

Dans des modes de réalisation préférés, le système ou le dispositif informatique comprend un ou plusieurs processeurs (qui peuvent appartenir à un même ordinateur ou à des ordinateurs différents) et une ou plusieurs mémoires (disque dur magnétique, disque optique, mémoire électronique ou tout support de stockage lisible par ordinateur) dans lesquelles est stocké un produit de programme informatique, sous la forme d'un ensemble d'instructions de code de programme à exécuter afin de mettre en œuvre tout ou partie des étapes de la méthode de contrôle. En variante, ou en combinaison, le système, le dispositif ou le module informatique peut comprendre un ou plusieurs circuits logiques programmables (FPGA, PLD, etc.), et/ou un ou plusieurs circuits intégrés spécialisés (ASIC), etc., adaptés à la mise en œuvre de tout ou partie desdites étapes de la méthode de contrôle. En d'autres termes, le système informatique comprend un ensemble de moyens configurés par logiciel (produit programme d'ordinateur spécifique) et/ou par matériel (processeur, FPGA, PLD, ASIC, etc.) pour mettre en œuvre les étapes de la méthode de sélection.

ANNEXE

```
{modèle 1}
Model structure:

================
(0) my-apache
(1) /usr/local/bin/httpd-foreground
(2) /usr
```

(3) /usr/bin
(4) /usr/bin/rm
(5) /usr/bin/rm
(6) rm
(7) -f
(8) /usr/local/apache2/logs/httpd.pid
(3) /usr/local
(4) /usr/local/apache2
(5) /usr/local/apache2/bin/httpd
(6) httpd
(7) -DFOREGROUND
(8)
(1) /dev/fd/6
(2) /usr
(3) /usr/local
(4) /usr/local/bin
(5) /usr/local/bin/httpd-foreground
(6) /bin/sh
(7) /usr/local/bin/httpd-foreground
(8)
(0)
(1) /proc/self/exe
(2) /dev
(3) /dev/fd
(4) /dev/fd/6
(5) /dev/fd/6
(6) runc
(7) init
(8)
(1) /usr/sbin/libvirtd
(2) /usr
(3) /usr/bin
(4) /usr/bin/mdevetl
(5) /usr/bin/mdevctl
(6) mdevctl
(7) list
(8) --dumpjson
(1) /usr/bin/docker
(2) /usr
(3) /usr/bin
(4) /usr/bin/docker
(5) /usr/bin/docker
(6) docker
(7) run
(8) -d
(7) ps
(8)
(1) /usr/bin/bash
(2) /usr
(3) /usr/bin
(4) /usr/bin/cat
(5) /usr/bin/cat
(6) cat
(7) /etc/seedfence/seedfence.ini
(8)
(4) /usr/bin/sleep
(5) /usr/bin/sleep
(6) sleep

(7) 15
(8)
(4) /usr/bin/grep
(5) /usr/bin/grep
(6) grep
(7) enabled
(8)
(7) httpd
(8)
(4) /usr/bin/awk
(5) /usr/bin/awk
(6) awk
(7) {print $1 }
(8)
(4) /usr/bin/docker
(5) /usr/bin/docker
(6) docker
(7) rm
(7) ps
(8)
(7) run
(8) -d
(7) stop
(4) /usr/bin/ping
(5) /usr/bin/ping
(6) ping
(4) /usr/bin/ls
(5) /usr/bin/ls
(6) ls
(1) /usr/bin/udevadm
(2) /usr
(3) /usr/lib
(4) /usr/lib/systemd
(5) /usr/lib/systemd/systemd-sysctl
(6) /usr/lib/systemd/systemd-sysctl
(1) /usr/bin/containerd
(2) /usr
(3) /usr/bin
(4) /usr/bin/containerd-shim-runc-v2
(5) /usr/bin/containerd-shim-runc-v2
(6) /usr/bin/containerd-shim-runc-v2
(7) -namespace
(8) moby
(1) /usr/sbin/iptables
(2) /usr
(3) /usr/sbin
(4) /usr/sbin/iptables
(5) /usr/sbin/iptables
(6) /usr/sbin/iptables
(7) --wait
(8) -t
(1) /usr/bin/dockerd
(2) /usr
(3) /usr/bin
(4) /usr/bin/docker-proxy
(5) /usr/bin/docker-proxy
(6) /usr/bin/docker-proxy
(7) -proto

(8) tcp
(3) /usr/sbin
(4) /usr/sbin/iptables
(5) /usr/sbin/iptables
(6) /usr/sbin/iptables
(7) --wait
(8) -t
(1) /usr/bin/containerd-shim-runc-v2
(2) /usr
(3) /usr/bin
(4) /usr/bin/containerd-shim-runc-v2
(5) /usr/bin/containerd-shim-rune-v2
(6) /usr/bin/containerd-shim-rune-v2
(7) -namespace
(8) moby
(4) /usr/bin/rune
(5) /usr/bin/rune
(6) runc
(7) --root
(8) /var/run/docker/runtime-runc/moby
(1) /usr/bin/rune
(2) /proc
(3) /proc/self
(4) /proc/self/exe
(5) /proc/self/exe
(6) runc
(7) init
(8)
(3) /proc/<pid>
(4) /proc/<pid>/exe
(5) /proc/<pid>/exe
(6) libnetwork-setkey
(7) -exec-root=/var/run/docker

{modèle 2}
Model structure:

================
(0) 1.2.3.4
(1) 56514
(2) 2
(3) RTRT
(4) 4
(5) R
(6) 3
(7) <avg: 32, std_dev: 0>
(8) 5
(9) T
(10) 8
(11) <avg: 32, std_dev: 0>
(12) <avg: 32, std_dev: 0>
(13) <avg: 8740.888888888889, std_dev: 234.469232496834>
(4) 5
(5) R
(6) 1
(7) <avg: 25, std_dev: 0>
(8) 8
(9) T

(10) 4
(11) <avg: 25, std_dev: 0>
(12) <avg: 25, std_dev: 0>
(13) <avg: 9260.305555555557, std_dev: 249.871835975126>
(4) 7
(5) R
(6) 6
(7) <avg: 14, std_dev: 0>
(8) 6
(9) T
(10) 5
(11) <avg: 14, std_dev: 0>
(12) <avg: 14, std_dev: 0>
(13) <avg: 9552.5, std_dev: 287.44318279154453>
(3) BCRT
(4) 3
(5) R
(6) 5
(7) <avg: 16, std_dev: 0>
(8) 31
(9) T
(10) 31
(11) <avg: 32, std_dev: 0>
(12) <avg: 16, std_dev: 0>
(13) <avg: 8698.10810810811, std_dev: 233.20421207356708>
(4) 7
(5) R
(6) 4
(7) <avg: 20, std_dev: 0>
(8) 31
(9) T
(10) 31
(11) <avg: 32, std_dev: 0>
(12) <avg: 20, std_dev: 0>
(13) <avg: 8910.945945945943, std_dev: 219.8551053499315>
(4) 6
(5) R
(6) 3
(7) <avg: 18, std_dev: 0>
(8) 31
(9) T
(10) 31
(11) <avg: 32, std_dev: 0>
(12) <avg: 18, std_dev: 0>
(13) <avg: 7511.054054054053, std_dev: 255.5942673664487>
(4) 5
(5) R
(6) 1
(7) <avg: 15, std_dev: 0>
(8) 31
(9) T
(10) 31
(11) <avg: 32, std_dev: 0>
(12) <avg: 15, std_dev: 0>
(13) <avg: 8823.621621621623, std_dev: 266.43607329738046>
(4) 1
(5) R
(6) 2

(7) <avg: 10, std_dev: 0>

(8) 31

(9) T

(10) 31

(11) <avg: 32, std_dev: 0>

(12) <avg: 10, std_dev: 0>

(13) <avg: 9254.621621621623, std_dev: 280.4261574867365>

(4) 8

(5) R

(6) 7

(7) <avg: 30, std_dev: 0>

(8) 31

(9) T

(10) 31

(11) <avg: 32, std_dev: 0>

(12) <avg: 30, std_dev: 0>

(13) <avg: 9966.243243243243, std_dev: 246.7097436046685>

(4) 4

(5) R

(6) 9

(7) <avg: 25, std_dev: 0>

(8) 31

(9) T

(10) 31

(11) <avg: 32, std_dev: 0>

(12) <avg: 25, std_dev: 0>

(13) <avg: 9301.297297297298, std_dev: 285.7172922204333>

(4) 2

(5) R

(6) 6

(7) <avg: 20, std_dev: 0>

(8) 31

(9) T

(10) 31

(11) <avg: 32, std_dev: 0>

(12) <avg: 20, std_dev: 0>

(13) <avg: 8549.243243243245, std_dev: 236.6679057022336>

(3) RTBC

(4) 1

(5) T

(6) 2

(7) <avg: 10, std_dev: 0>

(8) 31

(9) T

(10) 31

(11) <avg: 32, std_dev: 0>

(12) <avg: 10, std_dev: 0>

(13) <avg: 7981.333333333335, std_dev: 247.67519052177985>

(4) 4

(5) T

(6) 9

(7) <avg: 20, std_dev: 0>

(8) 31

(9) T

(10) 31

(11) <avg: 32, std_dev: 0>

(12) <avg: 20, std_dev: 0>

(13) <avg: 8954.166666666666, std_dev: 258.7247035406982>

(4) 3
(5) T
(6) 5
(7) <avg: 8, std_dev: 0>
(8) 31
(9) T
(10) 31
(11) <avg: 32, std_dev: 0>
(12) <avg: 8, std_dev: 0>
(13) <avg: 8879.861111111113, std_dev: 275.27129575281197>
(4) 2
(5) T
(6) 6
(7) <avg: 12, std_dev: 0>
(8) 31
(9) T
(10) 31
(11) <avg: 32, std_dev: 0>
(12) <avg: 12, std_dev: 0>
(13) <avg: 8266.111111111113, std_dev: 225.5789807211876>

## Revendications

1. Procédé de construction d'un modèle de détection d'anomalies, le procédé étant mis en œuvre par l'intermédiaire d'un dispositif informatisé de détection comprenant au moins une unité de calcul et une mémoire, le procédé comprenant au moins une itération des étapes suivantes :

    - obtention (S01) d'un ensemble d'évènements {Ei}, 1<i<n, chaque évènement de l'ensemble d'évènements comprenant au moins une propriété et au moins une valeur correspondante, un évènement étant une instance de données collectées auprès d'un système ;
    - détermination (S02) pour ledit ensemble d'évènements {Ei}, d'au moins un ordonnancement {OrdEi} de ladite au moins une propriété, ledit ordonnancement {OrdEi} étant représentatif d'une variabilité de ladite au moins une valeur correspondant à ladite au moins une propriété, de sorte que la propriété dont les valeurs varient le moins a un ordre inférieur à la propriété dont les valeurs varient le plus ;
    - construction (S03) du modèle de détection sous la forme d'une structure de données arborescente Tx, dans laquelle des nœuds sont formés à partir d'au moins certaines des valeurs des propriétés des évènements de l'ensemble d'évènements, , à l'aide dudit ensemble d'évènements {Ei} et selon ledit au moins un ordonnancement {OrdEi} de ladite au moins une propriété.

2. Procédé selon la revendication 1, **caractérisé en ce que** ladite étape de détermination (S02) dudit au moins un ordonnancement {OrdEi} de ladite au moins une propriété comprend :

    - une étape de calcul, à partir de l'ensemble d'évènements {Ei}, pour chacune de ladite au moins une propriété, d'au moins une donnée statistique de variabilité des valeurs de ladite au moins une propriété ;
    - une étape de détermination de l'ordonnancement {OrdEi} de ladite au moins une propriété en fonction de ladite au moins une donnée statistique de variabilité de sorte que les propriétés sont ordonnées par ordre croissant de variabilité.

3. Procédé selon la revendication 1, **caractérisé en ce que** ladite étape de construction (S03) de la structure de données arborescente Tx comprend :

    - une étape de création d'une structure arborescente courante en fonction d'un premier sous-ensemble d'évènements de l'ensemble d'évènements {Ei} et dudit au moins un ordonnancement {OrdEi} de ladite au moins une propriété ;
    - optionnellement, une étape de réduction du nombre de nœuds de la structure arborescente courante en fonction d'un deuxième sous-ensemble d'évènements de l'ensemble d'évènements {Ei}.

4. Procédé selon la revendication 3, **caractérisé en ce que** l'étape de création de la structure arborescente courante comprend, pour chaque évènement du premier sous-ensemble d'évènements et pour chaque propriété ordonnée selon ledit au moins un ordonnancement {OrdEi} :

    - recherche, au niveau d'un nœud courant de la structure arborescente courante, d'un nœud fils correspondant à la valeur courante d'une propriété courante de l'évènement ;
    - lorsqu'aucun nœud correspondant n'est identifié lors de ladite recherche, création d'un nouveau nœud au sein de ladite structure arborescente, la valeur du nouveau nœud étant fonction de ladite valeur courante pour ladite propriété ;
    - lorsque ladite recherche permet d'identifier un nœud fils, passage à la propriété suivante de l'évènement.

5. Procédé selon la revendication 3, **caractérisée en ce que** l'étape de réduction du nombre de nœuds de la structure arborescente courante en fonction du deuxième sous-ensemble d'évènements de l'ensemble d'évènements {Ei} comprend, pour chaque évènement du premier sous-ensemble d'évènements et pour chaque propriété ordonnée selon ledit au moins un ordonnancement {OrdEi} :

    - recherche, au niveau d'un nœud courant de la structure arborescente courante, d'un nœud fils correspondant à la valeur courante d'une propriété courante de l'évènement ;
    - lorsqu'aucun nœud correspondant n'est identifié lors de ladite recherche, suppression de tous les nœuds fils du nœud courant ;
    - lorsque ladite recherche permet d'identifier un nœud fils, passage à la propriété suivante de l'évènement.

6. Procédé de détection d'anomalies, le procédé étant mis en œuvre par l'intermédiaire d'un dispositif informatisé de détection comprenant au moins une unité de calcul et une mémoire, le procédé de détection d'anomalies comprenant les étapes suivantes :

    - Obtention (S11) d'au moins une structure de données arborescente Tx de détection d'anomalies construit par l'intermédiaire du procédé de construction selon l'une des revendications 1 à 5, à l'aide d'un ensemble d'évènements {Ei} 1<i<n ; et
    - Pour chaque évènement Ej, d'un ensemble d'évènements {Ej} 1<j<m, détermination (S12) d'une conformité de l'évènement Ej à au moins un chemin du modèle arborescent de détection.

7. Procédé de détection d'anomalies selon la revendication 6, **caractérisé en ce que** ladite étape de détermination (S12) d'une conformité de l'évènement Ej à au moins un chemin du modèle arborescent de détection comprend au moins une itération :

    - d'une étape de recherche, à partir d'un nœud courant du modèle arborescent de détection, d'un nœud fils Nk par comparaison (S121) d'une valeur valjkx d'une propriété Propk courante de l'évènement Ej avec au moins une valeur valk d'un nœud fils Nk correspondant du modèle arborescent de détection ;
    - d'une étape d'émission (S122) d'un signal représentatif d'une anomalie lorsque l'étape de recherche ne permet pas d'identifier un nœud fils correspondant.

8. Procédé de détection d'anomalies selon la revendication 7, **caractérisé en ce que** l'étape de recherche d'un nœud fils à partir d'un nœud courant nécessitant de comparer une valeur valjkx d'une propriété Propk courante de l'évènement Ej avec chacune des valeurs valk des nœuds fils Nk, comprend la détermination d'une fonction de comparaison et la mise en œuvre de la fonction de comparaison entre la valeur valjkx de la propriété Propk courante de l'évènement Ej et ladite au moins une valeur valk de chaque nœud fils Nk.

9. Dispositif de construction d'un modèle de détection d'anomalies, dispositif comprenant au moins une unité de calcul et une mémoire, le dispositif étant configuré pour mettre en œuvre au moins une itération des étapes suivantes :

    - obtention d'un ensemble d'évènements {Ei}, 1<i<n, chaque évènement de l'ensemble d'évènements comprenant au moins une propriété et au moins une valeur correspondante, un évènement étant une instance de données collectées auprès d'un système ;
    - détermination pour ledit ensemble d'évènements, d'au moins un ordonnancement {OrdEi} de ladite au moins une propriété, ledit ordonnancement {OrdEi} étant représentatif d'une variabilité de ladite au moins une valeur correspondant à ladite au moins une propriété, de sorte que la propriété dont les valeurs varient le moins a un ordre inférieur à la propriété dont les valeurs varient le plus ;

- construction du modèle de détection sous la forme d'une structure de données arborescente Tx, dans laquelle des nœuds sont formés à partir d'au moins certaines des valeurs des propriétés des évènements de l'ensemble d'évènements, , à l'aide dudit ensemble d'évènements {Ei} et selon ledit au moins un ordonnancement {OrdEi} de ladite au moins une propriété.

10. Programme informatique comportant des instructions pour la mise en œuvre d'un procédé selon l'une des revendications 1 à 8, lorsque lesdites instructions sont exécutées par un processeur d'un circuit de traitement informatique.

[Fig. 1]

Fig. 1

[Fig. 2]

Fig. 2

[Fig. 3]

Fig. 3

[Fig. 4]

Fig. 4

[Fig. 5]

Fig. 5

[Fig. 6]

Fig. 6

Europäisches
Patentamt

European
Patent Office

Office européen
des brevets

**RAPPORT DE RECHERCHE EUROPEENNE**

Numéro de la demande

EP 25 22 3667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KURNIAWAN HARTANTO ET AL: "Enhancing the Detection of Botnet Attacks in the Internet of Things Networks Through the Utilization of Hybrid Feature Selection", 2024 FORTEI-INTERNATIONAL CONFERENCE ON ELECTRICAL ENGINEERING (FORTEI-ICEE), IEEE, 24 octobre 2024 (2024-10-24), pages 89-94, XP034797737, DOI: 10.1109/FORTEI-ICEE64706.2024.10824638 | 1-4,6-10 | INV. G06F21/55 H04L9/40 |
| Y | * sections III-A,III-C,III-D; figure 2 * | 5 | |
| X | MARTEAU PIERRE-FRANCOIS: "Random Partitioning Forest for Point-Wise and Collective Anomaly Detection-Application to Network Intrusion Detection", IEEE TRANSACTIONS ON INFORMATION FORENSICS AND SECURITY, IEEE, USA, vol. 16, 11 janvier 2021 (2021-01-11), pages 2157-2172, XP011836157, ISSN: 1556-6013, DOI: 10.1109/TIFS.2021.3050605 [extrait le 2021-02-03] | 1-4,6-10 | |
| Y | * sections I, II-1), II-2) * | 5 | |
| Y | AWAAD TASNEEM A ET AL: "Lightweight Diagnostic-based Secure Framework for Electronic Control Units in Vehicles", 2021 INTERNATIONAL SYMPOSIUM ON NETWORKS, COMPUTERS AND COMMUNICATIONS (ISNCC), IEEE, 31 octobre 2021 (2021-10-31), pages 1-5, XP034030625, DOI: 10.1109/ISNCC52172.2021.9615864 * sections I,IV, IV-B) * | 5 | |

DOMAINES TECHNIQUES RECHERCHES (IPC)

G06F
H04L

Le présent rapport a été établi pour toutes les revendications

| Lieu de la recherche | Date d'achèvement de la recherche | Examinateur |
|---|---|---|
| Munich | 4 mai 2026 | Veillas, Erik |

EPO FORM 1503 03.82 (P04C02)